Europäisches Patentamt

European Patent Office

Office européen des brevets

(11) Publication number: **0 314 264**
**A2**

# EUROPEAN PATENT APPLICATION

(21) Application number: **88303983.6**

(51) Int. Cl.⁴: **C08J 5/12 , B29C 71/04**

(22) Date of filing: **03.05.88**

(30) Priority: **08.09.87 US 93676**

(43) Date of publication of application:
**03.05.89 Bulletin 89/18**

(84) Designated Contracting States:
**BE DE ES FR GB IT LU NL**

(71) Applicant: **GENCORP INC.**
**175 Ghent Road**
**Akron Ohio 44313(US)**

(72) Inventor: **Beecher, James F.**
**2399 Amesbury Road**
**Akron Ohio 44313(US)**
Inventor: **Cocain, Harry W.**
**2336 24th Street**
**Cuyahoga Falls Ohio 44223(US)**

(74) Representative: **Armitage, Ian Michael et al**
**MEWBURN ELLIS & CO. 2/3 Cursitor Street**
**London EC4A 1BQ(GB)**

(54) **Bonding of fibre-reinforced plastic parts.**

(57) Treatment of FRP surfaces for brief periods of time by exposure to short wavelength ultraviolet light in air, UV/Ozone, increases the adhesive potential of FRPs to polyurethane adhesives. Furthermore, FRP polymer surfaces treated by this process retain more adhesive strength after aging at elevated temperature in the presence of moisture than untreated surfaces or surfaces washed with isocyanate in $MeCl_2$. Epoxy adhesives, also, can be used.

# BONDING OF FRP PARTS

This invention relates to bonding together FRP parts which can be used in the manufacture of automobile, truck and other vehicles and products.

Parts manufactured from fiber reinforced polyester (FRP) parts are frequently bonded to other FRP parts or metal parts through the use of polyurethane adhesives. It has been common practice to treat the surfaces to be bonded by sanding and/or by wiping with a primer solution. Typically this primer solution consists of a diisocyanate in methylene chloride (2% PAPI). It has been shown by surface spectroscopy that methylene chloride removes a layer of low molecular weight materials, mostly hydrocarbons, from the FRP surface. The diisocyanate can then react with the FRP surface and the polyurethane adhesive.

Without the use of such a treatment, long term adhesion strength is reduced and at times even initial adhesion strength is not adequate. However, methylene chloride and free isocyanates are not desirable materials to use in manufacturing. On the other hand sanding is labor-intensive and can cause environmental (dust) problems.

In the manufacture of semiconductor products, where very clean metal and semiconductor surfaces are required, the UV/Ozone treatment is used for cleaning (C. E. Bryson et al, Surface Contamination, Genesis, Detection and Control, Vol. 1, K.L. Mittal Ed., Plenum 1979).

It is known that while exposure to short wavelength UV light or exposure to ozone alone will have some effect, the simultaneous exposure to UV light and ozone is many times more effective than either factor alone (John R. Vig, "UV/Ozone Cleaning of Surfaces: A Review," ibid).

The surface treatment of high density polyethylene and low density polyethylene with ozone and separately with a UV lamp oxidizes the surface to produce carboxyl groups (James Peeling et al, J. Polymer Sci. Poly. Chem. 21, 2047, 1983). See, also, Kirk-Othmer, "Encyclopedia Of Chemical Technology," Third Edition, Volume 16, John Wiley & Sons, New York, 1981, Pages 689-690 regarding UV irradiation of air or oxygen to produce ozone. The wear and static properties of vinyl chloride polymer based gramophone records are improved by treatment of their surfaces with UV at 200 nm in an atmosphere of oxygen at a pressure of at least 15 Torr (U.S. Pat. No. 4,307,045). 1 Tor = 1 mm of Hg. nm = nanometer.

Polyethylene terephthalate films can be photoetched with UV radiation having wave lengths less than 220 nm (U.S. Pat. No. 4,417,948).

Polyimides can be photoetched using lasers or low pressure Hg lamps (UV radiation) (European Patent Application Publ. No. 0 108 189 A2).

It is desirable that this invention should avoid the difficulties alluded to above and to this end a new method for adhering together FRP parts is provided.

According to a further aspect of the invention a novel FRP laminate is provided.

It has been found that the use of ultraviolet light of wavelength about 270 nm or less in air will ionize organic molecules on or in the surface of FRP parts to etch the surface of the part. This short wavelength radiation also forms ozone and atomic oxygen. These highly reactive species rapidly react to form carbon dioxide, carbon monoxide and volatile organic species from the low molecular weight material which is loosely bound at the surface. This results in an etched surface which with the use of a suitable adhesive, such as an epoxide, acrylate or urethane adhesive will provide an improved adhesive bond between FRP parts. This technique, also, eliminates the need to use a wipe of isocyanate in methylene chloride or to sand the surfaces.

The glass fiber reinforced thermoset plastic (FRP) such as the polyester resin (preferred) or vinyl ester resin, styrene and glass fiber composition can be a sheet molding compound (SMC) or a bulk molding compound (BMC), or other thermosetting FRP material as well as a high strength molding compound (HMC) or a thick molding compound. The FRP substrate can have from about 10 to 75% by weight of glass fibers. The SMC compound usually contains from about 25 to 30% by weight of glass fibers while the HMC compound may contain from about 55 to 60% by weight of glass fibers. The glass fiber reinforced thermoset plastic (FRP) substrate can be rigid or semirigid (may contain a flexibilizing moiety such as an adipate group in the polyester) and a low profile additive. The substrate, also, may contain other flexibilizing polymers, the elastomers and plastomers, such as the styrene-butadiene block copolymers. Unsaturated polyester glass fiber thermosets are known as shown by "Modern Plastics Encyclopedia," 1975-1976, October, 1975, Vol. 52, No. 10A, McGraw-Hill, Inc., New York, pages 61, 62, and 105 to 107; "Modern Plastics Encyclopedia," 1979-1980, October, 1979, Volume 56, Number 10A, pages 55, 56,58, 147 and 148 and "Modern Plastics Encyclopedia," 1980-81, October, 1980, Volume 57, Number 10A, pages 59, 60, and 151 to 153, McGraw-Hill, Inc., New York, N.Y. For more information on unsaturated polyester resins, vinyl ester resins and monomers for crosslinking these resins see U.S. Patent No. 4,331,735.

Suitable epoxy resin adhesives include the diglycidyl ether of bisphenol A (and its homologs), glycidyl ethers of glycerol, glycidyl ethers of bisphenol F, glycidyl ethers of long-chain bisphenols, epoxylated novalacs, the diglycidyl ester of linoleic dimer acid and so forth. They are cured with aliphatic amines, aromatic amines, anhydrides and polyamides. The epoxides are well known. For more information on epoxy resins please see Lee and Neville, "Epoxy Resins," McGraw-Hill Book Company, Inc., New York, 1957; Lee and Neville, "Handbook of Epoxy Resins," McGraw-Hill Book company, New York, 1967; Bruins, "Epoxy Resin Technology," Interscience Publishers, a division of John Wiley & Sons, New York, 1968 and "Encyclopedia Of Polymer Science And Technology," John Wiley & Sons, Inc., New York, Vol. 1, 1964.

Polyurethane (urethane, isocyanate) based adhesives suitable for use in this invention are well known. They are prepared from diisocyanates or triisocyanates, diisocyanate or triisocyanate terminated polyethers or polyesters (polyether urethanes or polyester urethanes). Examples of isocyanates which can be used are 2,4/2,6-tolylene diisocyanate, triphenyl methane-p,p′,p″-triisocyanate, the adduct of 2,4-toluene diisocyanate (3 moles) and 3-methylol pentylene glycol-2,4 (1 mole), diphenylmethane-p,p′-diisocyanate, dianisidine diisocyanate and polymethylene polyphenyl isocyanate (preferred) and the like.

Hydroxyl bearing polyethers and polyesters, e.g., polyols, are used for reaction with the isocyanates. Examples of polyether polyols which can be used include linear and branched polyethers having a plurality of ether linkages and containing at least two hydroxyl groups and being substantially free from functional groups other than hydroxyl groups. Among the polyoxyalkylene polyols which are useful in the practice of this invention are the polypropylene glycols, the polyproylene-ethylene glycols, and the polybutylene ether glycols. Other copolymers are the ethylene oxide, propylene oxide and butylene oxide adducts of 2-ethylhexanediol-1,3, glycerol, 1,2,6-hexanetriol, trimethylolpropane, trimethylolethane, pentaerythritol, triethanolamine, triisopropanolamine, ethylenediamine and ethanolamine.

Polyester polyols which can be used are obtained reacting (1) a major molar amount of a glycol such as ethylene-, propylene-, diethylene-, dipropylene- or butylene glycol; and (2) an acid or anhydride such as adipic acid, azelaic acid, terephthalic acid or phthalic anhydride and so forth. Examples of some polyesters are poly(ethylene succinate), poly(ethylene adipate), poly(diethylene adipate), poly(ethylene azelate) and poly(ethylene sebacate).

Cross-linking materials having from 2 to 8 hydroxyl groups can be included in the urethane formulation to increase cross-link density and so forth. Examples of such cross-linking agents are glycol, diethylene glycol, propylene glycol, butane diol-1,4, dipropylene glycol, glycerol, trimethylolpropane, butane triols, hexanetriols, trimethylolphenol, various tetrols, such as erythritol and pentaerythritol, pentols, hexols, such as dipentaerythritol and sorbitol, as well as alkyl glucosides, carbohydrates, polyhydroxy fatty acid esters such as castor oil and polyoxy alkylated derivatives of poly-functional compounds having three or more reactive hydrogen atoms, such as, for example the reaction product of trimethylolpropane, glycerol, 1,2,6-hexanetriol, sorbitol and other polyols with ethylene oxide, propylene oxide, or other alkylene oxides or mixtures thereof. The urethane adhesive formulation uses gelation catalysts like stannous octoate, dibutyl tin dilaurate and the like for the urethane forming reaction.

For information on isocyanate based adhesives see Skeist, "Handbook Of Adhesives," Reinhold Publishing corporation, New York, 1962. See, also, Saunders et al, "Polyurethanes Chemistry and Technology," Part I, Chemistry, Interscience Publishers, a division of John Wiley & Sons, New York, 1962.

Fillers can be added to the adhesives.

The processes and products of the present invention can be used in the manufacture of automobile parts such as grille and headlamp assemblies, deck hoods, fenders, door panels and roofs as well as in the manufacture of appliance and electrical components, furniture, machine covers and guards, bathroom components, structural panels and so forth. In particular, the process of the present invention is useful in joining a structural FRP to another structural FRP to reinforce it or to provide a mounting member for a part, for example, the non-visible parts of a car.

The following examples will serve to illustrate the present invention with more particularity to those skilled in the art.


Examples


An SMC was made as follows:


3

| Ingredients | % By Weight |
|---|---|
| Poly (propylene fumerate/adipate) | 7.4 |
| Styrene | 10.8 |
| Poly (ethylene/propylene adipate) polyurethane (low shrink additive) | 3.8 |
| Filler (calcium carbonate) | 48 |
| Glass Fibers | 28 |
| Peroxides, inhibitors, release agents, maturation agents, pigments | 2 |

The SMC composition was placed in a compression mold in a 240-ton press and cured at about 150°C for 120 seconds at a pressure of about 1150 psi to make an FRP part.

Flat FRP panels 15.2 cm x 12.7 cm were cut from the cured FRPs. The surfaces of some panels were not treated, others were surface wiped with a PAPI solution while still others were surface treated with UV/ozone before the surfaces of the panels were coated with an adhesive. Of a given pair of panels to be tested only the surface of one panel was coated with the adhesive although both surfaces could be coated with the adhesive.

For the UV/ozone treatment an Oriel 6036 low pressure mercury lamp with an Oriel 6047 power supply was used to provide the short wavelength ultraviolet radiation. According to the Oriel specification, the power supply consumes 14 watts; most of the radiant energy output (90%) is at the 254 nm mercury line and is about 1.3 milliwatts/cm2 at one inch distance. The lamp was partly covered with aluminum foil which served as a shield and reflector. During treatment at room temperature (ca 25°) in air at atmospheric pressure the sample surface was about 2-3 mm away from the lamp. Each increment of sample surface the size of the lamp (approximately 6 x 12 mm) was exposed for the treatment time. The UV/Ozone treatments were done in a hood, and UV absorbing goggles were worn for eye protection.

The adhesive used was a two component polyurethane adhesive. The adhesive base consisted of a prepolymer prepared by reacting a polypropylene ether polyol with excess diphenylmethane diisocyanate. Mineral fillers were added to this base. The curative contained a multifunctional polypropylene ether polyol, a polyurethane catalyst and filler. The components were mixed together and applied to one surface of the plate just before use. The adhesive was applied to the panels from a Kappa dispenser.

Lap shear adhesion tests were used on the FRP panels to evaluate adhesive strength. 2.5 cm lap joints were made using pairs of 15.2 cm x 12.7 cm flat panels using aluminum fixtures to hold the pieces in alignment during curing.

The panels were assembled and cured for 30 minutes at 100°C. The assemblies or specimens were stored overnight at room temperature and then heat treated for one hour at 150°C.

After curing and heat treatment, each of the composites was cut into five 2.5 cm wide lap shear test specimens.

All lap shear adhesion tests were conducted at 80°C using a crosshead speed of 0.127 cm/min. Half of the test specimens were aged in water for 7 days at 54°C, then stored for one day in air at room temperature before adhesion testing.

The results obtained on testing are shown in Tables I and II below:

4

Table I

| Effect of Treatment on Adhesive Strength | | | |
|---|---|---|---|
| Run No. | FRP Surface Treatment Prior to Applying Adhesive | Aging Conditions | Breaking Force (lbs.) |
| 1 | none | room temperature | 227 ± 35 |
| 2 | none | room temperature | 212 ± 24 |
| 3 | none | 54° C water for 7 days | 126 ± 14 |
| 4 | none | " | 146 ± 11 |
| 5 | 2% PAPI wipe | room temperature | 176 ± 17 |
| 6 | " | " | 280 ± 41 |
| 7 | " | 54° C water for 7 days | 141 ± 10 |
| 8 | " | " | 158 ± 4 |
| 9 | UV/Ozone 10 s | room temperature | 320 ± 38 |
| 10 | " | 54° C water for 7 days | 167 ± 17 |
| 11 | UV/Ozone 40 s | room temperature | 167 ± 58 |
| 12 | " | 54° C water for 7 days | 103 ± 43 |

TABLE II

| Effect of Treatment on Adhesive Strength | | | |
|---|---|---|---|
| Run No. | FRP Surface Treatment Prior to Applying Adhesive | Aging Conditions | Breaking Force (lbs.) |
| 21 | none | room temperature | 115 ± 18 |
| 22 | " | " | 104 ± 35 |
| 23 | " | 54° C water for 7 days | 47 ± 33 |
| 24 | " | " | 55 ± 25 |
| 25 | 2% PAPI wipe | room temperature | 216 ± 11 |
| 26 | " | " | 330 ± 42 |
| 27 | " | 54° C water for 7 days | 123 ± 12 |
| 28 | " | " | 142 ± 82 |
| 29 | UV/Ozone 2 s | room temperature | 392 ± 18 |
| 30 | " | 54° C water for 7 days | 229 ± 7 |
| PAPI = polymethylene polyphenyl isocyanate, 2% in methylene chloride. Upjohn Co. s = seconds. | | | |

Discussion

The effectiveness of the UV/Ozone treatment for modification of polymer surfaces was tested by treating the FRP surfaces for different exposure times. The results of one experiment in which UV/Ozone treatment times of 10 seconds and 40 seconds were used are given in Table I.

The results of Run Nos. 1-12 indicate that UV/Ozone treatment for 10 seconds is effective in improving adhesion strength and durability. The adhesive strength and durability of the samples given the UV/Ozone treatment for 10 seconds exceeded that for the samples given the normal treatment with isocyanate in methylene chloride (2% PAPI). However, UV/Ozone treatment for 40 seconds results in decreased adhesion strength and durability. Perhaps the longer treatment results in the formation of a weak boundary layer or a layer which is water sensitive.

As part of another series of adhesion tests, Runs Nos. 21-30, some FRP samples were given the UV/Ozone treatment for two seconds (preferred). The subsequent results of adhesion testing are given in Table II. These results show a dramatic increase in adhesive strength and durability with even shorter UV/Ozone treatment times. The results suggest that the 10 second treatment may be a bit too long.

In the case of polymer surfaces, there is an additional effect which can be beneficial. After the loosely bound organic material is removed by UV/Ozone treatment, some of the cross-linked polymeric material is oxidized. Oxidation can lead to the formation of peroxide, hydroxy and carboxylic acid groups on the polymer surface. Such groups can react with polyurethane and epoxy adhesives to form covalent bonds with the surface. It is believed that these bonds can provide resistance to loss of adhesive strength during thermal and humid aging conditions.

There is most likely an optimum UV/Ozone exposure for maximum adhesive strength or maximum adhesion durability. This would depend upon the amount of cleaning required and the amount of surface oxidation needed. It would appear likely that there is an upper exposure limit also. If the polymer surface is too highly oxidized, a layer of oxidized material could be formed which is not well cross-linked with the substrate. This layer would act as a weak boundary layer just like that found on many untreated FRP surfaces. The desirable and maximum treatment times will vary depending upon the polymer formulation and adhesive formulation.

Some precautions would be necessary during the use of the UV/Ozone process. The short wavelength of ultraviolet light must be confined by shielding to prevent damage to skin surfaces especially to eyes. The use of goggles which absorb UV light will prevent any eye damage. Experience indicates that high intensity sources of UV light are not necessary. Therefore, only ordinary means of protection are required.

The ozone and perhaps small amounts of carbon monoxide can require ventilation. The amounts of ozone are probably on the order of 50 parts per million or less. Carbon monoxide can conceivable be formed; the probability of formation is not known. In any case, the concentration will certainly be less than that of ozone.

The UV/Ozone treatment requires little energy and is rapid. It can easily be automated and can be combined with other operations such as the application of the adhesives. The area of treatment can be easily localized in cases where this might be desirable. The hazards are readily avoided.


## Claims

1. A method for the pretreatment of a fiber reinforced plastic (FRP) part before its adhesion to the surface of another component said method comprising irradiating a surface of the FRP part in air for a period of not more than about 10 seconds with ultraviolet (UV) radiation of wavelength not more than about 270 nm.

2. A method according to claim 1 wherein said other component is an FRP part and further comprising the step of irradiating said component with UV radiation of wavelength not more than about 270 nm on a surface to be adhered to said FRP part.

3. A method according to claim 1 or claim 2 further comprising coating the treated surface of the FRP part with an adhesive and joining the treated surface to the surface of the other component.

4. A method which comprises treating for not over about 10 seconds the surfaces of FRP parts in air at atmospheric pressure and at room temperature with ultra violet irradiation of not over about 270 nm thereby forming an ultraviolet-ozone zone on said surfaces to ionize organic molecules on or in the surfaces and to etch the surfaces of the parts, coating the treated surface of at least one part with an adhesive selected from the group consisting of epoxy based adhesives and polyurethane based adhesives, joining the adhesive coated and treated part and a treated part together so that the adhesive is positioned between the treated surfaces of the parts and curing and heat treating the same for from about 30 to 90 minutes at a temperature of from about 100 to 150 °C to form a strong adhesive bond between the parts.

5. A method according to claim 3 or claim 4 where the adhesive is an epoxide based adhesive.

6. A method according to claim 3 or claim 4 where the adhesive is a polyurethane based adhesive.

7. A method according to any one of the preceding claims where the ultraviolet irradiation is conducted for about 2 seconds.

8. A product as produced by the method of any one of the preceding claims.